# EUROPEAN PATENT APPLICATION

(11) **EP 3 674 700 A1**
(43) Date of publication of application: **01.07.2020**
(21) Application number: 18847958.8
(22) Date of filing: 23.08.2018
(51) Int. Cl.: G01N 27/04

(54) **SENSOR SUBSTRATE AND SENSOR DEVICE PROVIDED WITH SAME**

(30) Priority: 25.08.2017 JP 2017161960
(71) Applicant: KYOCERA Corporation, Kyoto 612-8501 (JP)
(72) Inventor: KIMURA, Takashi, Kyoto-shi Kyoto 612-8501 (JP); OTOMARU, Hidekazu, Kyoto-shi Kyoto 612-8501 (JP)
(74) Representative: Viering, Jentschura & Partner mbB Patent- und Rechtsanwälte
(86) International application number: PCT/JP2018/031169
(87) International publication number: WO 2019/039549

(57) **Abstract**

A sensor board (10) includes an insulating substrate (1), detection electrode (K) located on a surface of the insulating substrate (1) and including a positive electrode (2) and a negative electrode (3) adjacent to each other, and connection terminal (T) including a positive electrode terminal (4) electrically connected to the positive electrode (2) and a negative electrode terminal (5) electrically connected to the negative electrode (3). The negative electrode (3) has a smaller volume than the positive electrode (2).

## Description

### FIELD

The present invention relates to a sensor board and a sensor device including the sensor board.

### BACKGROUND

Automobiles may incorporate a diesel particulate filter (DPF) to collect particulate matter (PM) mainly containing soot in exhaust gas. To detect an abnormality of, for example, the DPF, a known PM detector that serves as a PM detection sensor may include an insulating substrate formed from sintered ceramics, such as sintered aluminum oxide, and detection electrodes located on the surface of the insulating substrate. The detector detects particulate matter based on a change in the electrical characteristics caused by a detection target, such as PM contained in exhaust gas, adhering between a pair of detection electrodes (refer to, for example, Japanese Unexamined Patent Application Publication Nos. 2012-47596 and 2014-32063).

To improve the detection accuracy, the PM detection sensor may include more pairs of detection electrodes. However, more pairs of detection electrodes use a larger area on the insulating substrate. The PM detection sensor including a larger insulating substrate cannot be downsized.

### BRIEF SUMMARY

A sensor board according to an aspect of the present invention includes an insulating substrate, detection electrode located on a surface of the insulating substrate and including a positive electrode and a negative electrode adjacent to each other, and connection terminal including a positive electrode terminal electrically connected to the positive electrode and a negative electrode terminal electrically connected to the negative electrode. The negative electrode has a smaller volume than the positive electrode 2.

A sensor device according to another aspect of the present invention includes the sensor board with the above structure, and a direct current power source connected to the connection terminals.

### BRIEF DESCRIPTION OF DRAWINGS

Fig. 1A is a top view of a sensor board according to a first embodiment of the present invention, and Fig. 1B is a cross-sectional view taken along line A-A in Fig. 1A.
Fig. 2 is a plan view of a sensor board according to a second embodiment of the present invention.
Fig. 3A is a plan view of a sensor board according to a third embodiment of the present invention, and Fig. 3B is a cross-sectional view taken along line B-B in Fig. 3A.
Fig. 4 is a cross-sectional view of a sensor device according to an embodiment of the present invention.

### DETAILED DESCRIPTION

A sensor board and a sensor device according to embodiments of the present invention will now be described with reference to the accompanying drawings. The terms upper and lower (e.g., upper surface) herein are for descriptive purposes, and do not intend to limit the directions in, for example, actual use of the sensor board or device.

### Sensor Board

### First Embodiment

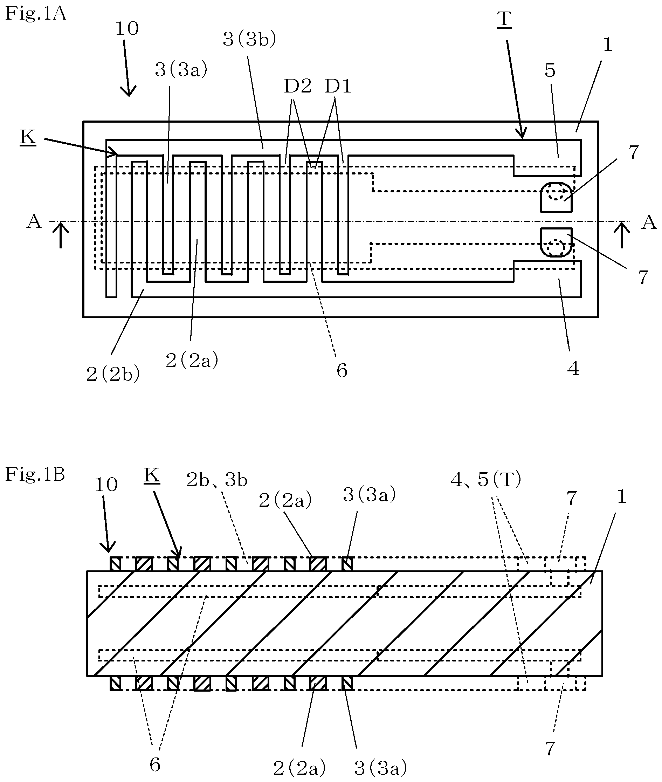

Fig. 1A is a top view of a sensor board according to a first embodiment of the present invention, and Fig. 1B is a cross-sectional view taken along line A-A in Fig. 1A.

A sensor board 10 is included in a sensor device for detecting particulate matter (PM) such as soot in exhaust gas from, for example, a diesel engine vehicle or a gasoline engine vehicle (e.g., installed on a path for exhaust gas from an automobile). The sensor board 10 includes an insulating substrate 1 having an upper surface and a lower surface, detection electrode K including a positive electrode 2 and a negative electrode 3 located on at least one surface of the insulating substrate 1, and connection terminal T located on at least one surface of the insulating substrate 1 and including a positive electrode terminal 4 electrically connected to the positive electrode 2 and a negative electrode terminal 5 electrically connected to the negative electrode 3. In the present embodiment, the sensor board 10 includes heat generators 6 inside the insulating substrate 1 and the detection electrode K is located on both the upper and lower surfaces of the insulating substrate 1.

The insulating substrate 1, which may be a rectangular plate (thin rectangular prism), serves as a base to receive the positive electrode 2 and the negative electrode 3 included in the detection electrode K in an electrically insulated manner. The insulating substrate 1 is formed from sintered ceramics, such as sintered aluminum oxide, sintered aluminum nitride, sintered mullite, sintered glass ceramic, or zirconium ceramic (sintered zirconium oxide). The insulating substrate 1 is a stack of multiple insulating layers formed from such sintered ceramics.

The insulating substrate 1 may be fabricated by, for example, stacking multiple insulating layers formed from sintered aluminum oxide in the manner described below. The insulating substrate 1 fabricated in the manner described below includes the vertically stacked insulating layers sintered with one another at their interfaces with no clearly viewable boundary between these insulating layers.

A raw material powder such as silicon oxide (SiO₂), magnesium oxide (MgO), or manganese oxide (Mn₂O₃) is first added to an aluminum oxide (Al₂O₃) powder as a sintering aid, and an appropriate binder, solvent, and plasticizer are further added to the mixture. The mixture is then kneaded to prepare ceramic slurry. The ceramic slurry is then shaped into a sheet using a method such as a doctor blade or by calendering to obtain a ceramic green sheet. The ceramic green sheet then undergoes punching as appropriate. Multiple ceramic green sheets prepared in this manner are stacked on one another as appropriate and fired at high temperatures (about 1300 to 1600 °C). The above processes allow the fabrication of the insulating substrate 1.

The detection electrode K includes the positive electrode 2 and the negative electrode 3 located adjacent to each other. In the example described below, the detection electrode K including the positive electrode 2 and the negative electrode 3 may be simply referred to as electrodes without being distinguished from each other. Also, the detection electrode K located on the upper surface of the insulating substrate 1 and those located on the lower surface of the insulating substrate 1 may be collectively referred to as the detection electrode K without being distinguished from each other.

In a portion of the sensor board 10 including the detection electrode K, the positive electrode 2 and the negative electrode 3 may have lower electrical insulation or be short-circuited due to particulate matter such as soot adhering to the insulating substrate 1. This allows detection of soot or other matter in the installation environment of the sensor board 10. An electrical short circuit between the positive electrode 2 and the negative electrode 3 can be detected by, for example, an external detection circuit connected to the electrodes. The environment contains, for example, the exhaust gas from an automobile described above.

The connection terminal T is located on at least one surface of the insulating substrate 1 (upper and lower surfaces in the example shown in Figs. 1A and 1B). The connection terminal T is electrically connected to the positive electrode 2 or the negative electrode 3 and apply a positive or negative potential to the electrodes. In other words, the sensor board 10 according to the present embodiment includes a positive electrode terminal 4 electrically connected to the positive electrode 2, and a negative electrode terminal 5 electrically connected to the negative electrode 3. The positive electrode terminal 4 and the negative electrode terminal 5 form the connection terminal T described above.

The detection electrode K including the positive electrode 2 and the negative electrode 3 as well as the connection terminal T including the positive electrode terminal 4 and the negative electrode terminal 5 are formed from a metal material that does not oxidize entirely in an environment containing, for example, a high-temperature air current (at about, for example, several hundreds to 1000 °C), such as exhaust gas from an automobile. This allows detection of particulate matter for a longer period of time. Examples of such metal materials include easily-passivatable metals and platinum. Electrodes made of platinum are highly resistant to oxidation at high temperatures, and are thus unlikely to oxidize entirely. Electrodes made of an easily-passivatable metal have their outer surfaces covered with passivation layers, and are thus unlikely to oxidize entirely.

Examples of easily-passivatable metals include base metal materials that contain at least one element selected from the group consisting of iron, aluminum, nickel, titanium, chromium, and silicon. The metal material for the detection electrode contains, for example, at least one of such base metal materials by at least about 80% by mass. The base metal materials do not catalyze decomposition of particulate matter. The use of such materials lowers the likelihood that the adhering particulate matter is decomposed unintentionally and thus increases the detection accuracy. The detection electrode K may contain other metal materials different from the base metal materials described above. Such other metal materials may be metal materials that do not easily form passivation layers, and may be, for example, tungsten.

The detection electrode K and the connection terminal T may be formed in the manner described below. A powder of at least one of the above base metal materials is kneaded with an organic solvent and a binder to prepare a metal paste. The metal paste is then applied, in a predetermined pattern, to a main surface and other areas of a ceramic green sheet to be the insulating substrate 1. The metal paste is applied by, for example, screen printing. The metal paste and the ceramic green sheet are then co-fired. The above processes allow the fabrication of the insulating substrate 1 including the detection electrode K and the connection terminal T on the surface(s).

The connection terminal T may be used in an environment other than a high temperature environment, and may be covered with no passivation layers. The connection terminal T may thus be formed from a material selected appropriately in accordance with the situation in which the sensor board 10 is used. For the sensor board 10 not used in a high temperature environment, for example, the connection terminal T may be formed from a metal material such as tungsten or molybdenum.

The sensor board 10 according to the present embodiment includes the negative electrode 3 smaller than the positive electrode 2 in a plan view. In the example shown in Figs. 1A and 1B, the positive electrode 2 and the negative electrode 3 adjacent to each other each include linear portions (line segments). The negative electrode 3 has a smaller (narrower) line width than the positive electrode 2. For the sensor board 10 according to embodiments of the present invention, the negative electrode 3 has a smaller volume than the positive electrode 2. Thus, the size difference between the electrodes is not limited to the difference in a plan view as described above. For example, the negative electrode 3 may have the same area as the positive electrode 2 but may be thinner than the positive electrode 2. The negative electrode 3 and the positive electrode 2 may have size differences determined with other components.

The sensor board 10 according to the present embodiment includes the negative electrode 3 having a relatively small volume (or area or thickness; the same applies hereafter), and can thus be easily downsized. The detection electrode K may be arranged more densely to improve the detection accuracy. The positive electrode 2 having a relatively large volume (or area or thickness; the same applies hereafter) is less likely to be affected by wear and can reduce electrode function deterioration caused by migration from the positive electrode 2 to the negative electrode 3. More specifically, the electric field between the electrodes may cause electrochemical migration between the electrodes. The electrochemical migration induces deposition from the positive electrode to the negative electrode, possibly causing defects such as voids in the positive electrode. The positive electrode having a relatively large volume is less likely to be affected by such defects and can reduce electrode function deterioration. This will be described in detail later.

Particulate matter to be detected includes soot (fine carbon powder), which is easily charged positively. Particulate matter thus tends to adhere to or around the negative electrode 3. Thus, the negative electrode 3 smaller than (e.g., having a smaller line width than) the positive electrode allows effective detection of, for example, soot adhering to the detection electrodes K. The positive electrode 3, which tends to oxidize upon receiving a positive potential, is less susceptible to wear, thus effectively reducing an increase in resistance to electricity passage and breaks in the detection electrode K. The sensor board 10 can easily be downsized and have higher detection sensitivity.

In the example shown in Figs. 1A and 1B, the positive electrode 2 and the negative electrode 3 are interdigitated electrodes. More specifically, the positive electrode 2 and the negative electrode 3 each include multiple linear electrode lines 2a or 3a arranged at intervals in a line width direction and a connection line 2b or 3b linearly interconnecting the ends of the electrode lines 2a or 3a. The electrode lines 3a in the negative electrode 3 each have a line width smaller than the line width of an adjacent electrode line 2a included in the positive electrode 2. The connection line 2b or 3b may interconnect the ends of the multiple electrode lines 2a or 3a in a different manner, such as in a zigzag manner, rather than linearly as described above.

The detection electrode K as interdigitated electrodes easily allow the multiple positive and negative electrode lines 2a and 3a to be arranged at small intervals. The multiple electrode lines 2a and 3a may easily receive a positive or negative potential collectively. In this case, the multiple electrode lines 2a in the positive electrode 2 are electrically connected to the positive electrode terminal 4 with the single connection line 2b, which linearly interconnects the ends of the electrode lines 2a. The multiple electrode lines 3a in the negative electrode 3 are also electrically connected to the negative electrode terminal 5 with the single connection line 3b, which linearly interconnects the ends of the electrode lines 3a. The multiple electrode lines 2a and 3a as the interdigitated electrodes are electrically connected to the connection terminals T (4 and 5) collectively to receive a positive or negative potential.

For the detection electrode K as interdigitated electrodes, the electrode lines 2a in the positive electrode 2 each have a line width of about, for example, 80 to 120 µm, whereas the electrode lines 3a included in the negative electrode 3 each have a line width of about 40 to 60 µm. More specifically, the line width of the negative electrode 3 is about 50% the line width of the positive electrode 2. The insulating substrate 1 thus has, for example, a plate-like profile with a quadrangular area of about 60 × 4 mm in a plan view and a thickness of about 600 to 1200 µm. The detection electrode K is located on, for example, a rectangular area with a side length of about 3.0 to 3.6 mm on the upper or lower surface. When the interval between an electrode line in the positive electrode 2 and an electrode line in the negative electrode 3 adjacent to each other (the distance between the outer sides of the adjacent electrode lines) is about 40 to 100 µm, about 16 to 35 pairs of positive and negative electrode lines 2a and 3a can be arranged on each of the upper and lower surfaces of the insulating substrate 1.

The above number of electrode pairs is counted based on each pair of adjacent positive and negative electrode lines 2a and 3a shown in Figs. 1A and 1B. In Fig. 1A, for example, one first electrode pair D1 includes the rightmost negative electrode line 3a and the positive electrode line 2a to the immediate left of the negative electrode line 3a, and one second electrode pair D2 includes the positive electrode line 2a included in the electrode pair D1 and the negative electrode line 3a to the immediate left of the positive electrode line 2a. The positive and negative electrode lines 2a and 3a in the middle of the electrode line array are commonly included in the two electrode pairs adjacent to each other.

As described below, a known sensor board (not shown) including a negative electrode and a positive electrode having the same size includes a fewer electrode line pairs than the sensor board 10 according to the present embodiment. More specifically, when a negative electrode included in a known sensor board has the same line width as the positive electrode in an example sensor board according to the present embodiment with the other components having the same dimensions, the insulating substrate may include about 14 to 29 pairs of electrode lines on each of the upper and lower surfaces. This number is about 83 to 88% of the number of electrode pairs in the sensor board 10 according to the present embodiment. If the sensor board 10 according to the present embodiment includes as many electrode pairs as the sensor board according to the comparative example, the area of the insulating substrate 1 in a plan view can be smaller (about 83 to 89%) in the present embodiment, conversely to the above proportion for the number of pairs. The sensor board 10 according to the present embodiment is thus downsized and improves detection accuracy.

The sensor board 10 according to the present embodiment includes the heat generators 6 inside the insulating substrate 1. Each heat generator 6 is heated to, for example, about 700 °C through resistive heating to decompose and remove particulate matter adhering to and around the first detection electrodes 2 and the second detection electrodes 3.

The heat generator 6 is, for example, a linear conductor with a small line width for generating heat through resistive heating, and may be a heater. The insulating substrate 1 includes heater terminals 7 electrically connected to the corresponding heat generator 6 on the upper or lower surface. The heater terminals 7 are electrically connected to an external power source to provide a current to the heat generator 6 from the external power source. The current generates heat (through resistive heating) in the heat generator 6. The external power source is, for example, a 20 V direct current power source.

In the example shown in Figs. 1A and 1B, connection conductors (with no labels) extend between the heater terminals 7 and the heat generator 6. The connection conductors each have a larger line width than the heat generator 6 and a relatively small electrical resistance. The conductor as the heat generator 6 having a smaller line width than the connection conductors has a greater electrical resistance, and thus generates heat through resistive heating with a current supplied through the heater terminals 7.

In the example shown in Figs. 1A and 1B, the insulating substrate 1 contains the heat generators 6 inside adjacent to the upper surface and the lower surface. The heat generated by the heat generators 6 is thus effectively conducted to the upper and lower surfaces of the insulating substrate 1. In this example, each heat generator 6 is located along the periphery of the insulating substrate 1 in a plan view. The heat generators 6 thus efficiently heat the upper and lower surfaces of the insulating substrate 1 including peripheral areas, through which heat can easily dissipate outside. The heat generators 6 thus effectively heat, decompose, and remove particulate matter, such as soot, adhering to or around the detection electrode K. The resultant sensor board 10 minimizes the time taken for regeneration, and allows easy fabrication of a highly practical sensor device.

### Second Embodiment

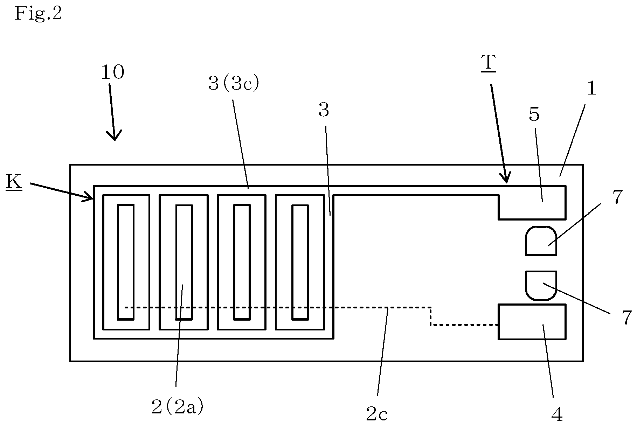

Fig. 2 is a cross-sectional view of a sensor board 10 according to a second embodiment of the present invention. In Fig. 2, the same components as in Figs. 1A and 1B are given the same reference numerals. In the example shown in Fig. 2, negative electrodes 3 include a peripheral portion 3c along the periphery of an insulating substrate 1 in a plan view. Positive electrodes 2 are arranged adjacent to the negative electrodes 3 within (or inward from) the area defined by the peripheral portion 3c. The positive electrodes 2 and the negative electrodes 3 adjacent to each other are linear (line segments), and are arranged in a line width direction. The negative electrodes 3 each have a line width smaller than the line width of each positive electrode 2. More specifically, the negative electrodes 3 are smaller than the positive electrodes 2 in a plan view.

In this example as well, the negative electrodes 3 each have a relatively small line width. This effectively increases the density of the detection electrode K arranged on the insulating substrate 1. The sensor board 10 can thus be downsized and improve detection accuracy. The peripheral portion 3c in the negative electrodes 3 may have substantially the same line width. Thus, the peripheral portion 3c located on the upper or lower surface of the insulating substrate 1 easily allows the insulating substrate 1 to remain small in a plan view.

With the positive electrodes 2 each having a relatively large line width, the detection electrode K including the positive electrodes 2 and the negative electrodes 3 can maintain the electrode function for a longer period of time. More specifically, the electric field between the positive and negative electrodes 2 and 3 may cause electrochemical migration between the electrodes. When electrochemical migration occurs, metal ions move from the positive electrodes 2 and are deposited onto the negative electrodes 3, possibly causing defects such as voids in the positive electrodes 2. However, such defects constitute a relatively small volume percentage in the positive electrodes 2 having a relatively large area (volume or thickness). This structure can reduce deterioration of the function of the positive electrodes 2, and thus reduces possible electrode function deterioration of the detection electrode K, or more specifically, the function of, for example, detecting electrical short circuits between the positive electrodes 2 and the negative electrodes 3 caused by adhering particulate matter.

In this example, the negative electrodes 3 include the peripheral portion 3c, which effectively attracts positively-charged particulate matter, such as soot, to the periphery of the insulating substrate 1. More specifically, the sensor board 10 can more efficiently adsorb, for example, soot in the surrounding environment. The peripheral portion 3c located along the periphery of the upper surface of the insulating substrate 1 defines a large area including the entire area in which the detection electrode K is located. Thus, the sensor board 10 effectively attracts and adsorbs, for example, soot.

In the example shown in Fig. 2, the multiple positive electrodes 2 are electrically connected to a positive electrode terminal 4 with a connection wire 2c inside the insulating substrate 1. Each positive electrode 2 is electrically connected to the connection wire 2c with a feedthrough conductor (not shown) extending through the insulating substrate 1 in the thickness direction from the positive electrode 2 to the connection wire 2c. The multiple negative electrodes 3 are electrically connected to a negative electrode terminal 5 with the peripheral portion 3c. The two ends of each negative electrode 3 are directly connected to the peripheral portion 3c. The negative electrodes 3 are thus electrically connected to the peripheral portion 3c. More specifically, the multiple positive electrodes 2 or the multiple negative electrodes 3 included in the detection electrode K are electrically connected to the single positive electrode terminal 4 or the single negative electrode terminal 5 collectively. Thus, an electric potential can be easily applied to the multiple positive electrodes 2 and the multiple negative electrodes 3 in this example as well.

In the example shown in Fig. 2, the two ends of each negative electrode 3 are directly connected to the peripheral portion 3c. In other words, each negative electrode 3 surrounds the corresponding positive electrode 2 in a frame together with a part of the peripheral portion 3 in a plan view. The negative electrodes 3 and the positive electrodes 2 in such a surrounding pattern can be easily electrically short-circuited by the particulate matter, such as soot, which tends to adhere to or around the negative electrodes 3 on the surface of the insulating substrate 1. In other words, the sensor improves the detection accuracy (low-level detection) of, for example, soot in the environment.

The negative electrodes 3 may not be connected to the peripheral portion 3c at their two ends. The linear negative electrodes 3 may be connected to the peripheral portion 3c at one of the two ends to allow electrical connection between the negative electrodes 3 and the negative electrode terminal 5 through the peripheral portion 3c. Each negative electrode 3 can receive an electric potential from the negative electrode terminal 5 to adsorb, for example, soot.

The peripheral portion 3c, the feed-through conductors, and the connection wire 2c are formed from the same metal material and in the same manner as the detection electrode K and the connection terminal T in the example shown in Figs. 1A and 1B. For example, the feed-through conductors may be formed by filling, with a metal paste, through-holes in a ceramic green sheet to be the insulating substrate 1 and firing the resultant sheet. The through-holes may be formed by die machining or punching, for example, with laser. In this case, the feed-through conductors and the connection wire 2c, which will not be exposed in a high-temperature environment, may be formed from the same metal material as the connection terminal T. The upper ends or other portions of the feed-through conductors for connection with the positive electrodes 3 are at relatively a small distance from the positive electrodes 3. Thus, the ends, or the upper ends, of the feed-through conductors may be formed from, for example, a metal material for easily forming a passivation layer, similarly to the detection electrode K.

### Third Embodiment

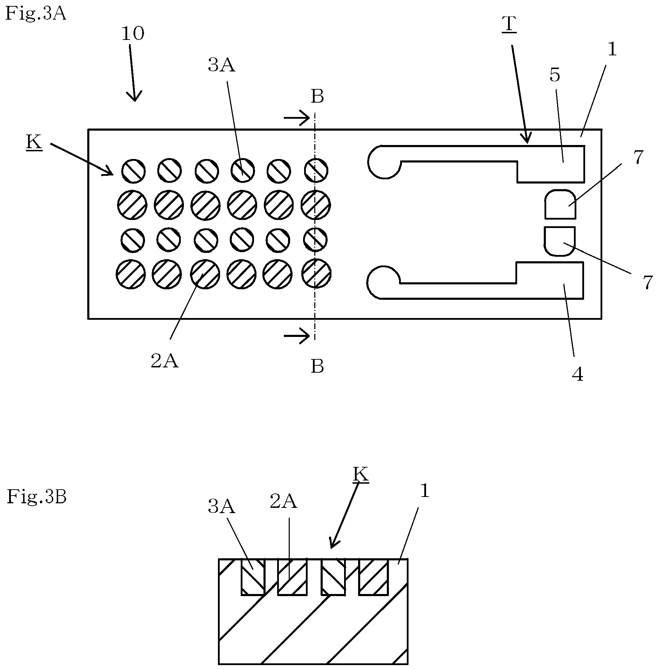

Fig. 3A is a plan view of a sensor board 10 according to a third embodiment of the present invention, and Fig. 3B is a cross-sectional view taken along line B-B in Fig. 3A. In Figs. 3A and 3B, the same components as in Figs. 1A and 1B are given the same reference numerals. In the example shown in Figs. 3A and 3B, the detection electrode K includes columnar positive electrodes 2A and columnar negative electrodes 3A. The detection electrode K as columnar conductors is, for example, feed-through conductors extending partially through the insulating substrate 1 from the upper surface in the thickness direction. The columnar conductors are, for example, cylindrical. The positive electrodes 2A and the negative electrodes 3A that are actually to be exposed in the environment to adsorb, for example, soot are circular. As shown in Figs. 3A and 3B, each negative electrode 3A has a smaller diameter than each positive electrode 2A.

In this example as well, the negative electrodes 3 each have a relatively small diameter. This effectively increases the density of the detection electrode K arranged on the insulating substrate 1. The sensor board 10 can thus be downsized and improve detection accuracy. Also, the positive electrodes each have a relatively large diameter. This can reduce possible electrode function deterioration of the detection electrode K, similarly to the interdigitated electrode described above.

The diameter of each circular negative electrode 3A is, for example, about 50 to 80 µm. The diameter of each circular positive electrode 2A is, for example, about 100 to 120 µm, which is about 1.5 to 2 times the negative electrode 3A.

The columnar positive electrodes 2 and the columnar negative electrodes 3 are electrically connected to connection terminal T with, for example, circuit-like inner wires (not shown) inside the insulating substrate 1. In this case, the inner wires connected to the positive electrodes 2A or the negative electrodes 3A are electrically connected to the connection terminal T with connection conductors 4a or 5a located on the upper surface of the insulating substrate 1 for connection with corresponding positive or negative electrodes. The connection conductors 4a and 5a extend, on the upper surface of the insulating substrate 1, from adjacent to the area in which the detection electrode K is arranged to the connection terminal T.

The multiple positive electrodes 2A and the multiple negative electrodes 3A in the detection electrode K that are circular in a plan view as in the example in Fig. 3A can use a smaller area on the upper surface of the insulating substrate 1. Thus, more pairs of adjacent positive and negative electrodes 2A and 3A can be arranged easily, or an area for electrode pairs can be easily smaller. The sensor board 10 can thus be downsized and improve detection accuracy effectively.

### Sensor Device

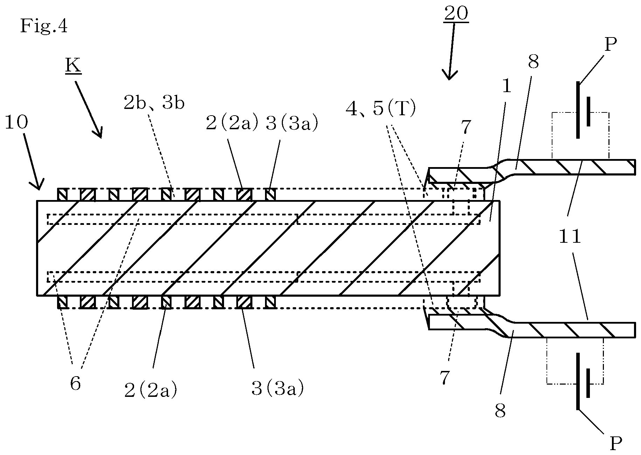

As described above, the sensor board 1 with the above structure and direct current (DC) power sources P connected to the connection terminals T mainly form a sensor device 20 according to an embodiment of the present invention. In Fig. 4, the DC power sources P are schematically shown using circuit symbols. In the example shown in Fig. 4, the connection terminal T in the sensor board 10 is electrically connected to the power source terminals in the DC power sources P with lead terminals 8. The lead terminals 8 connected to the positive electrode terminals 4 are connected to the positive power source terminals, whereas the lead terminals 8 connected to the negative electrode terminals 5 are connected to the negative power source terminals.

The lead terminals 8 are not directly used to detect particulate matter, such as soot. Thus, the lead terminals 8 may be formed from any material appropriately selected in accordance with the surrounding environment, the yield and the economy of the sensor board 10, or other conditions. When, for example, the lead terminals 8 are formed from a metal material highly resistant to oxidation such as platinum or gold, the sensor device 10 including the lead terminals 8 can be more reliable. The lead terminals 8 may also be formed from, for example, an iron-based alloy, such as an iron-nickel-cobalt alloy, or copper for economy. The lead terminals 8 formed from an iron-based alloy may have their outer surfaces protected with plating layers, such as gold plating layers (not shown).

The lead terminals 8 are joined to the connection terminal T with, for example, a brazing material (with no labels) such as a silver brazing material (silver-copper brazing material) or a gold brazing material. Similarly to the lead terminals 8, the brazing material may be any material appropriately selected in accordance with various conditions for either manufacturing or using the sensor board 10 and the sensor device 20.

The sensor device 20 can detect a decrease in electrical insulation or detect electrical short circuits between the positive electrodes 2 and the negative electrodes 3, or more specifically, adhering soot or other matter with a detector, such as a multimeter, connected between a pair of positive and negative lead terminals 8. In this case, the detector is, for example, an ammeter. An ammeter is connected to allow passage of a current when the positive electrodes 2 and the negative electrodes 3 are electrically short-circuited. For example, a DC power source P and an ammeter may be sequentially connected in series between a pair of positive and negative lead terminals 8.

The sensor device according to the embodiment of the present invention can be downsized and improve detection accuracy, in the same manner as the sensor board according to each embodiment described above.

The structures according to the embodiments of the present invention are not limited to the structures described above, and may be modified variously within the scope of the present invention.

For example, the detection electrode K on the upper surface of the insulating substrate 1 and the detection electrode K on the lower surface of the insulating substrate 1 may have different shapes and may be arranged differently in a manner to have, for example, different intervals between adjacent positive and negative electrodes. The detection electrode K may be arranged on side surfaces of the rectangular insulating substrate 1 along the long sides or on side surfaces along the short sides (end faces) in a plan view, rather than on the upper and lower surfaces.

For the negative electrodes 3 including the peripheral portion 3c, circular positive and negative electrodes (columnar conductors) may be located in the area surrounded by the peripheral portion 3. In this case, the peripheral portion 3c can effectively attract particulate matter, such as soot, in the environment. The positive electrodes and the negative electrodes arranged relatively densely can effectively adsorb the attracted soot onto the surface of the insulating substrate 1.

The interval between adjacent positive and negative electrodes 2 and 3 may differ from the interval between other adjacent positive and negative electrodes 2 and 3. In this case, adhering soot or other matter can be detected readily in areas including electrodes at smaller intervals, whereas adhering soot or other matter can be detected over a longer period of time in areas including electrodes at larger intervals.

The circular positive electrodes 2A and the circular negative electrodes 3A may be arranged in a manner other than in a grid pattern as in the example in Fig. 3A, and may include adjacent electrodes shifted diagonally (in a diagonal grid pattern). In this case, adjacent positive and negative electrodes 2A and 3A can be arranged at a smaller distance.

### Reference Signs List

- 1: insulating substrate
- 2: positive electrode
- 2A: positive electrode (another example)
- 2a: electrode line
- 2b: connection line
- 2c: connection wire
- 3: negative electrode
- 3A: negative electrode (another example)
- 3a: electrode line
- 3b: connection line
- 3c: peripheral portion
- 4: positive terminal
- 5: negative terminal
- 6: heat generator
- 7: heater terminal
- 8: lead terminal
- 10: sensor board
- 11: lead terminal
- 20: sensor device
- K: detection electrode
- T: connection terminal
- P: DC power source
- D1, D2: electrode pair

## Claims

1. A sensor board, comprising:
an insulating substrate;
detection electrode located on a surface of the insulating substrate, the detection electrodes including a positive electrode and a negative electrode adjacent to each other; and
connection terminal including a positive electrode terminal electrically connected to the positive electrode and a negative electrode terminal electrically connected to the negative electrode,
wherein the negative electrode has a smaller volume than the positive electrode.

2. The senor board according to claim 1, wherein
the negative electrode is smaller than the positive electrode in a plan view.

3. The senor board according to claim 1 or claim 2, wherein
the negative electrode has a smaller thickness than the positive electrode.

4. The senor board according to any one of claims 1 to 3, wherein
the positive electrode and the negative electrode each include a plurality of linear electrode lines arranged at intervals in a line width direction, and
the electrode line included in the negative electrode has a smaller line width than an adjacent electrode line included in the positive electrode.

5. The sensor board according to claim 4, wherein
the positive electrode further includes a connection line linearly interconnecting ends of the electrode lines included in the positive electrode, and the negative electrode further includes a connection line linearly interconnecting ends of the electrode lines included in the negative electrode.

6. The sensor board according to claim 4 or claim 5, wherein
the plurality of electrode lines include a plurality of conductors located intermittently, and the plurality of conductors are electrically connected to one another.

7. The sensor board according to any one of claims 1 to 6, wherein
in a plan view, the negative electrode includes a peripheral portion located along a periphery of the insulating substrate, and the positive electrode and the negative electrode are adjacent to each other in an area inward from the peripheral portion.

8. The sensor board according to any one of claims 1 to 7, wherein
the insulating substrate includes a heat generator.

9. The sensor board according to claim 8, wherein
the insulating substrate further includes a heater terminal electrically connected to the heat generator.

10. The sensor board according to claim 9, wherein
the heater terminal is located on a surface of the insulating substrate and adjacent to the detection electrode.

11. A sensor device, comprising:
the sensor board according to any one of claims 1 to 10; and
a direct current power source connected to the connection terminal.
